# EUROPÄISCHE PATENTSCHRIFT

(11) **EP 1 706 015 B1**
(45) Veröffentlichungstag und Bekanntmachung des Hinweises auf die Patenterteilung: **07.10.2009**
(21) Anmeldenummer: 04804669.2
(22) Anmeldetag: 03.12.2004
(51) Int. Cl.: A47L 15/48

(54) **GESCHIRRSPÜLMASCHINE MIT EINER ENERGIESPARENDEN TROCKNUNGSEINRICHTUNG**
DISHWASHER COMPRISING AN ENERGY-SAVING DRYING UNIT
LAVE-VAISSELLE COMPRENANT UN SYSTEME DE SECHAGE A ECONOMIE D'ENERGIE

(30) Priorität: 04.12.2003 DE 10356787
(43) Veröffentlichungstag der Anmeldung: 04.10.2006
(73) Patentinhaber: BSH Bosch und Siemens Hausgeräte GmbH, 81739 München (DE)
(72) Erfinder: CLASSEN, Egbert, 86637 Wertingen (DE); JERG, Helmut, 89537 Giengen (DE)
(86) Internationale Anmeldenummer: PCT/EP2004/053255
(87) Internationale Veröffentlichungsnummer: WO 2005/053504

(56) Entgegenhaltungen:
- EP-A- 0 358 279
- EP-A- 0 777 998
- EP-A- 0 800 785
- EP-A- 1 142 527
- DE-A1- 3 741 652

## Beschreibung

Die Erfindung betrifft eine Geschirrspülmaschine mit einem Spülbehälter und Vorrichtungen zum Spülen von Geschirr mittels Spülflotte sowie ein Verfahren zum Trocknen von Geschirr in Geschirrspülmaschinen.

Eine Geschirrspülmaschine weist bekanntlich ein Spülverfahren auf, dessen Programmablauf im Allgemeinen aus wenigstens einem Teilprogrammschritt "Vorspülen", einem Teilprogrammschritt "Reinigen", wenigstens einem Teilprogrammschritt "Zwischenspülen", einem Teilprogrammschritt "Klarspülen" und einem Teilprogrammschritt "Trocknen" besteht. Zur Erhöhung des Reinigungseffekts wird dabei die Spülflüssigkeit vor oder während eines Teilprogrammschrittes erwärmt. Die Erwärmung der Spülflüssigkeit erfolgt üblicherweise mittels elektrischer Heizungen im Spüler und/oder durch Zuleitung warmen Wassers aus der Hausinstallation. Zur Trocknung von Spülgut in einer Geschirrspülmaschine sind unterschiedliche Trocknungssysteme bekannt.

Beispielsweise kann das Spülgut durch Eigenwärmetrocknung getrocknet werden, wenn die Spülflüssigkeit im Teilprogrammschritt "Klarspülen" erwärmt wird und somit das heiß klargespülte Spülgut durch den so aufgebauten materialabhängigen Wärmeinhalt des Spülguts während des Teilprogrammschritts "Trocknen" von selbst trocknet. Um diese Eigenwärmetrocknung zu erreichen, wird die Spülflüssigkeit im Teilprogrammschritt "Klarspülen" mit einer gesonderten Heizung auf eine bestimmte Temperatur erwärmt und über in der Geschirrspülmaschine vorhandene Sprüheinrichtungen auf das Spülgut aufgebracht Durch die relativ hohe Temperatur der Spülflüssigkeit im Teilprogrammschritt "Klarspülen" von üblicherweise von 55°C bis 75°C wird erreicht, dass eine hinreichend große Wärmemenge auf das Spülgut übertragen wird, so dass das am Spülgut anhaftende Restwasser durch die im Spülgut gespeicherte Wärme verdampft. Der Dampf kondensiert an kälteren Flächen oder wird mittels Gebläse aus dem Geschirrspüler ausgetragen.

Bei einer weiteren bekannten Trocknungseinrichtung wird eine separate Heizquelle, z.B. ein Heißluftgebläse, im Spülbehälter dazu verwendet, das feuchte Luftgemisch beim Trocknungsvorgang zu erwärmen, damit die Luft im Spülbehälter eine größer Menge an Feuchtigkeit aufnehmen kann.

Ein Nachteil bei den oben beschriebenen Heizungssysteme nach dem beschriebenen Stand der Technik besteht darin, dass die Erwärmung der Spülflüssigkeit mit einem relativ hohen Energiebedarf verbunden ist und die benötigte Wärmeenergie für jede Erwärmungsphase mittels der elektrischen Heizelemente neu erzeugt werden muss. Ebenso haben die bekannten Heizungssysteme den Nachteil, dass die Erwärmung der Spülflüssigkeit im Teilprogrammschritt "Klarspülen" sowie die Vorgänge im Teilprogrammschritt "Trocknen" selbst mit einem hohen Energiebedarf verbunden sind und die benötigte Wärmeenergie nach dem Trocknungsvorgang verloren geht, weil diese in die Umgebung entweichen.

Es sind Geschirrspülmaschinen bekannt, bei denen die Feuchtluft nach außen abgelassen wird. Dies ist nachteilig, da die umgebenden Küchenmöbel geschädigt werden und das Verfahren eine eventuell unhygienische Luftzufuhr in den Geschirrspüler von außen erfordert.

Des Weiteren sind Geschirrspülmaschinen bekannt, bei denen vor dem Ausleiten die Feuchtluft über Kondensationsflächen geleitet wird, an denen die Feuchtigkeit kondensiert. Dieses Kondenswasser wird entweder in den Spülbehälter oder in spezielle Auffangbehälter geleitet.

Aus der DE 30 21 746 A1 ist ein Verfahren zum Betreiben einer Geschirrspülmaschine bekannt, bei dem ein wärmeleitend mit dem Spülbehälter verbundener Wärmetauscher während eines Teilprogrammschrittes "Trocknen" mit kaltem Frischwasser gespeist wird. Dadurch wird eine Kondensationsfläche auf der Innenseite des Spülbehälters erzeugt, an der die Feuchtigkeit kondensiert und das entstehende Kondenswasser im Spülbehälter verbleibt. Da der Temperaturunterschied zwischen der Feuchtluft und dem eingefüllten Frischwasser relativ gering ist und die Frischwassermenge sich stetig erwärmt, ergibt sich der Nachteil, dass die Kondensation der Feuchtluft lange dauert und die Kondensationsleistung stetig geringer wird und die Dauer des Teilprogrammschrittes "Trocknen" lang ist, bei mäßigem Trocknungsergebnis. Mit der Dauer des Trocknungsvorganges werden durch die feuchtwarme Umgebung die stets vorhandenen Keime auf dem Spülgut zum schnellen Wachstum angeregt.

Bei der Geschirrspülmaschine der EP 1 142 527 A2 wird Wasser in einem vom Spülraum getrennt angeordneten Wasserbehälter durch Luft erwärmt, die über einen Luftkanal aus dem Spülraum herausgeleitet und entlang dem Wasserbehälter geführt wird. Das erwärmte Wasser ist für einen unmittelbar nachfolgenden Wasserzufuhrschnitt, d.h. Spülgang verwendbar.

Bei der Haushalts-Geschirrspülmaschine der EP 0 358 279 A1 ist ein weitgehend geschlossenes Trockensystem vorgesehen, bei dem Luft aus dem Spülbehälter der Geschirrspülmaschine über eine durch Aufheizung regenerierbare Trockenvorrichtung mit Zeolith als Trockenmittel und von dieser zurück in den Spülbehälter zirkuliert.

Aufgabe der vorliegenden Erfindung ist es daher, eine Geschirrspülmaschine und ein zugehöriges Verfahren bereitzustellen, mit der es möglich ist, unter wirtschaftlichen Gesichtspunkten das im Spülbehälter befindliche Spülgut effektiv und effizient zu trocknen und somit den Energieaufwand trotz sehr guter Trocknungsleistung so gering wie möglich zu halten.

Diese Aufgabe wird durch die erfindungsgemäße Geschirrspülmaschine mit den Merkmalen gemäß Anspruch 1 und ein erfindungsgemäßes Verfahren mit den Merkmalen gemäß Anspruch 6 gelöst. Vorteilhafte Weiterbildungen der vorliegenden Erfindung sind in den Unteransprüchen gekennzeichnet.

Die erfindungsgemäße Geschirrspülmaschine mit einem Spülbehälter und Vorrichtungen zum Spülen von Geschirr mittels Spülflotte verfügt Ober einen mit dem Spülbehälter wärmeleitend verbundenen Behälter mit einem verdampfbaren und/oder sublimierbaren Medium und eine Sorptionskolonne mit reversibel dehydrierbaren Material, wobei zwischen Behälter und Sorptionskolonne ein Gasaustausch möglich ist sowie der Behälter und/oder die Sorptionskolonne einerseits mittelbar zur Trocknung des Geschirrs verwendet wird und andererseits die zur Desorption der Sorptionskolonne eingesetzte Wärmeenergie zur Erwärmung der im Spülbehälter befindlichen Spülflotte und/oder des Geschirrs wenigstens teilweise verwendet wird.

In einer bevorzugten Ausführungsform sind der Behälter und die Sorptionskolonne vorzugsweise verschließbar mit einem Ventil über eine Leitung zum Gasaustausch miteinander verbunden und der Behälter die Sorptionskolonne und die Leitung eine nach außen geschlossene Einheit.

In einer weiteren Ausführungsform ist während eines Teilprogrammschrittes "Trocknen" das Ventil geöffnet und dadurch das Medium im Behälter verdampfbar, wodurch der Behälter abkühlt, um Feuchtigkeit an der Innenseite des Spülbehälters im Bereich des Behälters kondensieren zu lassen und das reversibel dehydrierbare Material in der Sorptionskolonne nimmt den Mediumdampf aus dem Behälter auf und dadurch ist die Sorptionskolonne erwärmbar. Aufgrund der stark abgekühlten Innenseite des Spülbehälters kann damit wegen des großen Temperaturunterschiedes, z. B. von 50°, schnell eine große Menge an Feuchtigkeit im Spülbehälter kondensieren gegenüber nicht gekühlten oder nur mit Frischwasser gekühlten Spülbehälterinnenwänden.

Zweckmäßigerweise ist mit einem Gebläse Luft durch einen Auslass aus dem Spülbehälter in Leitungen und wieder zurück in den Spülbehälter durch einen Einlass 10 leitbar, wobei zum Wärmeaustausch zwischen Luft und Sorptionskolonne die Sorptionskolonne vorzugsweise in der Leitung angeordnet ist. Damit kann die Luft im Spülbehälter erwärmt werden, um das Feuchtigkeitsaufnahmevermögen der Luft zu erhöhen und das Trocknungsergebnis zu verbessern. Des Weiteren wird damit die an der Sorptionskolonne frei werdende Wärmeenergie zur Erwärmung der Luft im Spülbehälter genutzt.

Vorteilhafterweis ist zur Desorption des reversibel dehydrierbaren Materials in der Sorptionskolonne eine vorzugsweise elektrische Heizung angeordnet.

In einer weiteren Ausführungsform ist bei eingeschalteter elektrischer Heizung zur Desorption der Sorptionskolonne die Sorptionskolonne erwärmbar und bei geöffnetem Ventil das in der Sorptionskolonne gebundene Medium verdampfbar, der in der Sorptionskolonne freigesetzte Mediumdampf über die Leitung zum Behälter leitbar und der Mediumdampf im Behälter kondensierbar, wodurch der Behälter mit Medium aufgrund der Kondensationsswärme erwärmbar ist. Damit kann die im Behälter frei werdende Kondensationswärme zur Erwärmung der Spülflotte und/oder des Geschirrs verwendet werden, weil sich der Spülbehälter im Bereich des Behälters erwärmt und Wasser aus dem Behälter an den Innenraum des Spülbehälters abgibt.

Zweckmäßigerweise ist während eines Teilprogrammschrittes mit zu erwärmender Spülflüssigkeit, z. B. "Reinigen' oder "Vorspülen", Luft aus dem Spülbehälter durch die Leitungen und wieder zurück in den Spülbehälter leitbar, wobei die Luft an der Sorptionskolonne erwärmbar ist. Das ermöglicht in besonders vorteilhafter Weise auch die Verwendung der an der Sorptionskolonne frei werdenden Wärmeenergie zur Erwärmung des Geschirrs und/oder der Spülflotte.

Vorteilhafterweise ist das Medium z. B. Wasser und das reversible, dehydrierbare Material z. B. Zeolith.

Die Erfindung betrifft auch ein Verfahren zum Trocknen in einer Geschirrspülmaschine mit einem Spülbehälter mit folgenden Schritten:
- ein Medium in einem mit dem Spülbehälter wärmeleitend verbundenem Behälter verdampft und/oder sublimiert, wodurch sich das Medium abkühlt,
- im Spülbehälter im Bereich des Behälters Feuchtigkeit kondensiert,
- der im Behälter erzeugte Mediumdampf von reversibel, dehydrierbarem Material in einer Sorptionskolonne, die zum Gasaustausch mit einem Ventil über eine Leitung mit dem Behälter verbunden ist, aufgenommen wird und dadurch das reversibel dehydrierbare Material erwärmt wird,
- Luft aus dem Spülbehälter zum reversibel, dehydrierbarem Material geleitet, daran erwärmt wird und wieder zurück in den Spülbehälter geleitet wird.

Zweckmäßigerweise ist das Medium z. B. Wasser und das reversible, dehydrierbare Material z. B. Zeolith. Wasser ist ein preiswertes und leicht verfügbares Medium, so dass beispielsweise ein Nachfüllen von Medium jederzeit einfach möglich ist.

In einer zusätzlichen Ausführungsform sind der Behälter mit Medium und die Sorptionskolonne mit reversibel, dehydrierbarem Material über eine Leitung mit einem Ventil zur Leitung des Mediumdampfes miteinander verbunden und vorzugsweise sind der Behälter, der Sorber und die Leitung eine nach außen geschlossene Einheit. Damit tritt vorteilhafterweise aufgrund des geschlossenen Kreislaufes kein Verlust an Medium auf, so dass ein Nachfüllen von Medium nicht erforderlich ist.

Vorteilhafterweise wird Luft aus dem Behandlungsraum über einen Auslass in Leitungen von einem Gebläse zum reversiblen dehydrierbarem Material zum Erwärmen der Luft und Wieder zurück über einen Einlass in den Behandlungsraum geleitet. Dies ermöglicht die Nutzung der an der Sorptionskolonne frei werdenden Wärmenergie zur Erwärmung des Geschirrs und/oder der Spülflotte.

In einer weiteren Ausführungsform wird das reversible, dehydrierbare Material zur Desorption erwärmt, der aus der Desorption des reversiblen, dehydrierbaren Materials freigesetzte Mediumdampf im Behälter kondensiert, wodurch sich das Medium im Behälter erwärmt.

Zweckmäßigerweise wird das reversible, dehydrierbare Material von einem elektrischen Heizelement erwärmt.

In einer weiteren Ausführungsform wird Luft aus dem Behandlungsraum über einen Auslass in Leitungen von einem Gebläse zum reversiblen dehydrierbarem Material geleitet, um die Luft zu erwärmen und wieder zurück über einen Einlass in den Behandlungsraum geleitet. Hiermit kann auch die an der Sorptionskolonne frei werdende Wärmeenergie zum Erwämen des Geschirrs und/oder der Spülflotte genutzt werden.

In einer zusätzlichen Ausführungsform wird das Verfahren während eines Teilprogrammschrittes mit zu erwärmendem Geschirr und/oder Spülflotte, z. B "Reinigen" oder "Vorspülen", durchgeführt, um die zur Desorpion eingesetzte Wärmeenergie wenigstens teilweise zur Erwärmung des Geschirrs und/oder der Spülflotte zu verwenden.

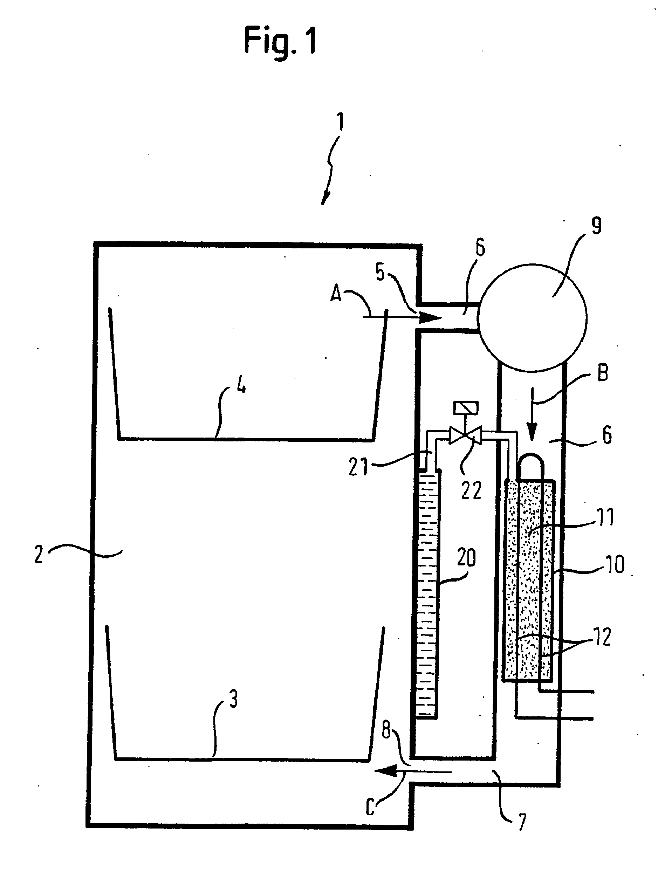

Die Erfindung wird nachstehend anhand dem in der Fig. 1 dargestellten Ausführungsbeispiel einer erfindungsgemäßen Geschirrspülmaschine erläutert. Es zeigt:
- Fig. 1: einen schematisierten Querschnitt durch eine erfindungsgemäße Geschirrspülmaschine

Die einzige Figur zeigt in schematischer Darstellungsweise eine erfindungsgemäße Geschirrspülmaschine 1 mit einem Spülbehälter 2, in dem Geschirrkörbe 3, 4 zur Einordnung von nicht dargestelltem Spülgut angeordnet sind.

Die Geschirrspülmaschine 1 weist eine mit dem Spülbehälter 2 flüssigkeitsleitend verbundene, reversibel dehydrierbares Material 11 enthaltende Sorptionskolonne 10 und einen mit dem Spülbehälter 2 wärmeleitend und mit der Sorptionskolonne 10 verschließbar, flüssigkeitsleitend verbundenen, mit einem Medium, z. B. Wasser, gefüllten Behälter 20 auf, wobei die Sorptionskolonne 10, wie weiter unten näher erläutert wird, zeitweilig den Behälter 20 abkühlt.

Die Sorptionskolonne 10 ist mit einer Leitung 21 mit dem Behälter 20 verbunden. In der Leitung 21 ist ein in Normalstellung geschlossenes Ventil 22 angeordnet, mit dem die Leitung 21, wie weiter unten näher erläutert wird, während des Teilprogrammschritts "Trocknen" geöffnet wird. Die Sorptionskolonne 10, der Behälter 20 und die Leitung 21 sind zur Verbesserung der Funktion vakuumisiert.

Der Spülbehälter 2 weist einen in seinem oberen Bereich angeordneten Auslass 5 mit einer Leitung 6 zur Sorptionskolonne 10 und einen in seinem unteren Bereich angeordneten Einlass 8 mit einer Leitung 7 von der Sorptionskolonne 10 auf. In der Leitung 6 zur Sorptionskolonne 10 ist ein Gebläse 9 angeordnet, das der Sorptionskolonne 10 Luft aus dem Spülbehälter 2 zuführt.

Bei dem geschlossenen Luftsystem ist ein Austausch von verschmutzter Luft aus der Umgebung ausgeschlossen, womit eine Rückanschmutzung des behandelten Gutes verhindert wird. Das Gebläse lässt sich leicht ansteuern, so dass der Einsatz der Sorptionskolonne 10 genau gesteuert werden kann.

Zur Desorption des reversibel dehydrierbaren Materials 11 ist im gezeigten Ausführungsbeispiel ein elektrisches Heizelement 12 in der Sorptionskolonne 10 angeordnet.

Eine Geschirrspülmaschine weist bekanntlich ein Spülverfahren auf dessen Programmablauf im Allgemeinen aus wenigstens einem Teilprogrammschritt "Vorspülen", einem Teilprogrammschritt "Reinigen", wenigstens einem Teilprogrammschritt "Zwischenspülen", einem Teilprogrammschritt "Klarspülen" und einem Teilprogrammschritt "Trocknen" besteht. Während des Teilprogrammschritts "Trocknen kühlt die Sorptionskolonne 10 den Behälter 20 ab. Hierzu wird das Ventil 22 und damit die Verbindung zwischen dem mit Wasser gefüllten Behälter 20 und der Sorptionskolonne 10 geöffnet.

Das in der Sorptionskolonne 10 enthaltene reversibel dehydrierbare Material 11 hat eine verhältnismäßig große Kapazität zur Feuchtigkeitsaufnahme. Wird nun der Behälter 20 durch Öffnen des Ventils 22 mit der Sorptionskolonne 10 verbunden, nimmt das reversibel dehydrierbare Material 11 in kurzer Zeit eine große Menge des in dem Behälter 20 enthaltenen Wassers auf und der in dem Behälter 20 verbliebene Rest von Wasser wird durch Verdunstungskälte derartig abgekühlt, dass es z. B. gefriert. Damit wird ein sehr großer Temperaturunterschied zwischen der Feuchtluft und der Kondensationsfläche, die an der Innenseite des Spülbehälters 2 im Bereich des Behälters 20 entsteht, erzeugt, der einen Auslass an Feuchtluft aus der Geschirrspülmaschine 1 verhindert und die Dauer des Teilprogrammschrittes "Trocknen" wesentlich verkürzt, bei bestem Trocknungsergebnis. Gleichzeitig wird - während eines Teilprogrammschrittes "Trocknen" - Luft mit dem Gebläse 9 aus dem Spülbehälter 2 durch die Leitungen 6, 7 über die Sorptionskolonne 10 und wieder zurück in den Spülbehälter 2 geleitet. Der Luftweg ist mit den Pfeilen A, B und C angedeutet. Aufgrund der auftretenden Kondensationswärme erwärmt sich das reversibel dehydrierbare Material 11 auf hohe Temperaturen, z. B. 140°. Damit wird auch die durch die Leitungen 6, 7 umgewälzte Luft erwärmt und kann somit mehr Feuchtigkeit aufnehmen. Die in den Spülbehälter 2 eingeleitete warme Luft kann das Geschirr erwärmen und Feuchtigkeit aufnehmen, d. h. das Geschirr trocknen. Damit ist eine Erwärmung der Spülflotte in einem dem Teilprogrammschritt vorhergehenden Teilprogrammschritt, z. B. "Klar spülen", nicht erforderlich, was eine erhebliche Energieeinsparung darstellt.

Wie bekannt, wird reversibel dehydrierbares Material 11 zur Desorption auf sehr hohe Temperaturen, z. B. 300°, erhitzt. Hierzu wird die Heizung 12 eingeschaltet, um die Desorption des reversibel dehydrierbaren Materials 11 vorzunehmen. Dabei tritt die gespeicherte Flüssigkeit als heißer Wasserdampf aus, gelangt über die Leitung 21 bei geöffnetem Ventil 22 zum Behälter 20 und kondensiert dort. Der Behälter 20 erwärmt sich damit wegen der auftretenden Kondensationswärme. Die Innenseite des Spülbehälters 2 erwärmt sich somit im Bereich des Behälters 20, wodurch das Geschirr und/oder die Spülflotte im Spülbehälter 2 erwärmbar ist, weil die im Behälter 20 frei werdende Kondensationswärme an den Innenraum im Spülbehälter 2, d. h. das Geschirr und/oder die Spülflotte, abgegeben wird.
Damit kann eine weitere, zusätzliche Heizung weitgehendst entfallen und die zur Desorption eingesetzte Energie kann bis auf die geringe Energie, die zur Überwindung der Bindungskräfte zwischen Wasser und reversibel dehydrierbarem Material benötigt wird, nahezu vollständig zur Erwärmung der Spülflotte und/oder des Geschirrs verwendet werden. Des Weiteren wird Luft aus dem Spülbehälter 2 während des Teilprogrammschritts mit zu erwärmender Spülflotte und/oder Geschirr, z. B. "Reinigen" oder "Vorspülen", durch die Sorptionskolonne 10 und wieder in den Spülbehälter 2 zurück geleitet. Hierzu wird das Gebläse 9 eingeschaltet. Der Luftweg ist mit den Pfeilen A, B und C angedeutet. Dadurch kann z. B. die in der Sorptionskolonne 10 enthaltene Restwärme in den Spülbehälter 2 geleitet werden. Bei einer Aktivierung des Gebläses 9 während der Desorptionsphase kann die von der Heizung 12 erzeugte Wärme zur Erwärmung der Spülflotte und/oder des Geschirrs ausgenutzt, d. h. die an der Sorptionskolonne 10 frei werdende Wärmeenergie verwendet werden.

Mit der vorliegenden Erfindung ist eine Geschirrspülmaschine 1 bereitgestellt, mit der es möglich ist, unter wirtschaftlichen Gesichtspunkten das im Spülbehälter 2 befindliche Spülgut effizient zu trocknen sowie den Energieaufwand so gering wie möglich zu halten. Aufgrund der schnellen Trocknung kann eine Keimbildung weitgehend oder völlig ausgeschlossen werden. Außerdem ist auch eine effektive Trocknung von Geschirr mit geringem Wärmespeichervermögen, z. B. Kunststoffgeschirr, möglich, weil die Trocknung nicht durch Eigenwärme des Geschirrs, welche im Teilprogrammschritt "Klarspülen" aufgebracht wird, durchgeführt wird.

## Patentansprüche

1. Geschirrspülmaschine (1) mit einem Spülbehälter (2) und Vorrichtungen zum Spülen von Geschirr mittels Spülflotte, **dadurch gekennzeichnet, dass** ein mit dem Spülbehälter (2) wärmeleitend verbundener Behälter (20) mit einem verdampfbaren und/oder sublimierbaren Medium und eine Sorptionskolonne (10) mit reversibel dehydrierbaren Material (11) vorgesehen sind, wobei Behälter (20) und Sorptionskolonne (10) zum Gasaustausch mit einem Ventil (22) über eine Leitung (21) derart miteinander verbunden sind, dass der Behälter (20) und/oder die Sorptionskolonne (10) einerseits mittelbar zur Trocknung des Geschirrs verwendet ist und andererseits die zur Desorption der Sorptionskolonne (10) eingesetzte Wärmeenergie zur Erwärmung der im Spülbehälter befindlichen Spülflotte und/oder des Geschirrs wenigstens teilweise verwendet ist.

2. Geschirrspülmaschine nach Anspruch 1, **dadurch gekennzeichnet, dass** der Behälter (20) und die Sorptionskolonne (10) vorzugsweise verschließbar mit dem Ventil (22) über die Leitung (21) zum Gasaustausch miteinander verbunden sind, und dass der Behälter (20), die Sorptionskolonne (10) und die Leitung (21) eine nach außen geschlossene Einheit sind.

3. Geschirrspülmaschine nach einem der Ansprüche 1 oder 2, **dadurch gekennzeichnet, dass** mit einem Gebläse (9) Luft durch einen Auslass (5) aus dem Spülbehälter (2) in Leitungen (6, 7) und wieder zurück in den Spülbehälter (2) durch einen Einlass (8) leitbar ist, wobei zum Wärmeaustausch zwischen Luft und Sorptionskolonne (10) die Sorptionskolonne (10) vorzugsweise in der Leitung (6) angeordnet ist.

4. Geschirrspülmaschine nach einem der vorhergehenden Ansprüche, **dadurch gekennzeichnet, dass** zur Desorption des reversibel dehydrierbaren Materials (11) in der Sorptionskolonne (10) eine vorzugsweise elektrische Heizung (12) angeordnet ist.

5. Geschirrspülmaschine (1) nach einem der vorhergehenden Ansprüche, **dadurch gekennzeichnet, dass** das Medium z. B. Wasser ist und das reversible, dehydrierbare Material (11) z. B. Zeolith ist.

6. Verfahren zum Trocknen in einer Geschirrspülmaschine (1) mit einem Spülbehälter (2) mit folgenden Schritten:
- ein Medium in einem mit dem Spülbehälter (2) wärmeleitend verbundenem Behälter (20) verdampft und/oder sublimiert, wodurch sich das Medium abkühlt,
- im Spülbehälter (2) im Bereich des Behälters (20) Feuchtigkeit kondensiert,
- oder im Behälter (20) erzeugte Mediumdampf von reversibel, dehydrierbarem Material (11) in einer Sorptionskolonne (10), die zum Gasaustausch mit einem Ventil (22) über eine Leitung (21) mit dem Behälter (20) verbunden ist, aufgenommen wird und **dadurch** das reversibel dehydrierbare Material (11) erwärmt wird,
- Luft aus dem Spülbehälter (2) zum reversibel, dehydrierbarem Material (11) geleitet, daran erwärmt wird und wieder zurück in den Spülbehälter (2) geleitet wird.

7. Verfahren nach Anspruch 6, **dadurch gekennzeichnet, dass** das Medium z. B. Wasser und das reversible, dehydrierbare Material (11) z. B. Zeolith ist.

8. Verfahren nach einem der Ansprüche 6 oder 7, **dadurch gekennzeichnet, dass** der Behälter (20) mit Medium und die Sorptionskolonne (10) mit reversibel, dehydrierbarem Material (11) über eine Leitung (21) mit einem Ventil (22) zur Leitung des Mediumdampfes miteinander verbunden sind und vorzugsweise der Behälter (20), der Sorber (10) und die Leitung (21) eine nach außen geschlossene Einheit sind.

9. Verfahren nach einem der Ansprüche 6 mit 8, **dadurch gekennzeichnet, dass** während eines Teilprogrammschrittes "Trocknen" das Ventil (22) geöffnet wird und **dadurch** das Medium im Behälter (20) verdampfbar wird, dass durch das Verdampfen des Mediums der Behälter (20) abgekühlt wird, so dass Feuchtigkeit an der Innenseite des Spülbehälters (2) im Bereich des Behälters (20) kondensiert, und dass vom reversibel dehydrierbaren Material (11) in der Sorptionskolonne (10) Mediumdampf aus dem Behälter (20) aufgenommen und **dadurch** die Sorptionskolonne (10) erwärmt wird.

10. Verfahren nach einem der Ansprüche 6 mit 9, **dadurch gekennzeichnet, dass** Luft aus dem Behandlungsraum (2) über einen Auslass (5) in Leitungen (6, 7) von einem Gebläse (9) zum reversiblen dehydrierbarem Material (11) zum Erwärmen der Luft und wieder zurück über einen Einlass (8) in den Behandlungsraum (2) geleitet wird.

11. Verfahren nach einem der Ansprüche 6 mit 10, **dadurch gekennzeichnet, dass**
- das reversible, dehydrierbare Material (11) zur Desorption erwärmt wird,
- der aus der Desorption des reversiblen, dehydrierbaren Materials (11) freigesetzte Mediumdampf im Behälter (20) kondensiert, wodurch sich das Medium im Behälter (20) erwärmt.

12. Verfahren nach Anspruch 11, **dadurch gekennzeichnet, dass** das reversible, dehydrierbare Material (11) von einem elektrischen Heizelement (17) erwärmt wird.

13. Verfahren nach einem der Ansprüche 11 oder 12, **dadurch gekennzeichnet, dass** Luft aus dem Behandlungsraum (2) über einen Auslass (5) in Leitungen (6, 7, 9) von einem Gebläse (9) zum reversiblen dehydrierbarem Material (11) geleitet wird, um die Luft zu erwärmen und wieder zurück über einen Einlass (8) in den Behandlungsraum (2) geleitet wird.

14. Verfahren nach einem der Ansprüche 11 mit 13, **dadurch gekennzeichnet, dass** es während eines Teilprogrammschrittes, mit zu erwärmendem Geschirr und/oder Spülflotte, z. B "Reinigen" oder "Vorspülen" durchgeführt wird, um die zur Desorption eingesetzte Wärmeenergie wenigstens teilweise zur Erwärmung des Geschirrs und/oder der Spülflotte zu verwenden.

15. Verfahren nach einem der Ansprüche 11 mit 14, **dadurch gekennzeichnet, dass** bei eingeschalteter elektrischer Heizung (12) zur Desorption der Sorptionskolonne (10) die Sorptionskolonne (10) erwärmt wird und bei geöffnetem Ventil (22) das in der Sorptionskolonne (10) gebundene Medium verdampft wird, der in der Sorptionskolonne (10) freigesetzte Mediumdampf Ober die Leitung (21) zum Behälter (20) geleitet wird und der Mediumdampf im Behälter (12) kondensiert wird, wodurch der Behälter (20) mit Medium aufgrund der Kondensationswärme erwärmt wird.

16. Verfahren nach Anspruch 15, **dadurch gekennzeichnet, dass** während eines Teilprogrammschrittes mit zu erwärmender Spülflüssigkeit, z. B. "Reinigen" oder "Vorspülen", Luft aus dem Spülbehälter (2) durch Leitungen (6, 7) und wieder zurück in den Spülbehälter (2) geleitet wird, wobei die Luft an der Sorptionskolonne (10) erwärmt wird.

## Claims

1. Dishwashing machine (1) with a rinsing container (2) and devices for rinsing dishes by means of rinsing solution, **characterised in that** a container (20) thermally conductively connected with the rinsing container (2) is provided with an evaporable and/or sublimatable medium and a sorption column (10) with reversibly dehydratable material (11), wherein container (20) and sorption column (10) are so connected together for gas exchange by a valve (22) via a duct (21) that the container (20) and/or the sorption column (10) on the hand is or are used indirectly for drying the dishes and on the other hand the thermal energy used for desorption of the sorption column (10) is employed at least in part for heating the rinsing solution located in the rinsing container and/or of the dishes.

2. Dishwashing machine according to claim 1, **characterised in that** the container (20) and the sorption column (10) are connected together, preferably closably, by the valve (22) via the duct (21) for the gas exchange and that the container (20), the sorption column (10) and the duct (21) are an outwardly closed unit.

3. Dishwashing machine according to one of claims 1 and 2, **characterised in that** air can be conducted by a fan (9) through an outlet (5) out of the rinsing container (2) to ducts (6, 7) and back again into the rinsing container (2) through an inlet (8), wherein for the heat exchange between air and sorption column (10) the sorption column (10) is preferably arranged in the duct (6).

4. Dishwashing machine according to any one of the preceding claims, **characterised in that** for desorption of the reversibly dehydratable material (11) a preferably electrical heating means is arranged in the sorption column (10).

5. Dishwashing machine (1) according to any one of the preceding claims, **characterised in that** the medium is, for example, water and the reversibly dehydratable material (11) is, for example, Zeolite.

6. Method for drying in a dishwashing machine (1) with a rinsing container (2), comprising the following steps:
- a medium evaporates and/or sublimates in a container (20) thermally conductively connected with the rinsing container (2), whereby the medium cools,
- moisture condenses in the rinsing container (2) in the region of the container (20),
- the medium steam generated in the container (20) is taken up by reversibly dehydratable material (11) in a sorption column (10), which for the gas exchange is connected with the container (20) by a valve (22) via a duct (21), and the reversibly dehydratable material (11) is thereby heated and
- air from the rinsing container (2) is conducted to the reversibly dehydratable material (11), heated thereat and conducted back into the rinsing container (2).

7. Method according to claim 6, **characterised in that** the medium is, for example, water and the reversibly dehydratable material (11) is, for example, Zeolite.

8. Method according to one of claims 6 or 7, **characterised in that** the container (20) with medium and the sorption column (10) with reversibly dehydratable material (11) are connected together by a duct (21) with a valve (22) for conducting the medium steam and the container (20), sorber (10) and duct (21) are preferably an outwardly closed unit.

9. Method according to any one of claims 6 to 8, **characterised in that** during a part program step of "drying" the valve (22) is opened and the medium is thereby evaporatable in the container (20), that the container (20) is cooled by the evaporation of the medium so that moisture condenses at the inner side of the rinsing container (2) in the region of the container (20) and that medium steam from the container (20) is taken up by the reversibly dehydratable material (11) in the sorption column (10) and the sorption column (10) is thereby heated.

10. Method according to any one of claims 6 to 9, **characterised in that** air from the treatment chamber (2) is conducted by way of an outlet (5) in ducts (6, 7, 9) by a fan (9) to the reversibly dehydratable material (11) for heating the air and is conducted back again to the treatment chamber (2) by way of an inlet (8).

11. Method according to any one of claims 6 to 10, **characterised in that**
- the reversibly dehydratable material (11) is heated for the desorption and
- the medium steam liberated from the desorption of the reversibly dehydratable material (11) condenses in the container (20), whereby the medium in the container (20) heats.

12. Method according to claim 11, **characterised in that** the reversibly dehydratable material (11) is heated by an electrical heating element (17).

13. Method according to one of claims 11 and 12, **characterised in that** air from the treatment chamber (2) is conducted by way of an outlet (5) in ducts (6, 7, 9) by a fan (9) to the reversibly dehydratable material (11) in order to heat the air and is conducted back again to the treatment chamber (2) by way of an inlet (8).

14. Method according to any one of claims 11 to 13, **characterised in that** it is performed during a part program step with dishes and/or rinsing solution to be heated, for example 'cleaning' or 'pre-rinsing', in order to use the heat energy, which is employed for the desorption, at least partly for heating the dishes and/or the rinsing solution.

15. Method according to any one of claims 11 to 14, **characterised in that** when the electrical heating means (12) for desorption of the sorption column (10) is switched on the sorption column is heated and when the valve (22) is open the medium bound in the sorption column (10) is evaporated, the medium steam liberated in the sorption column (10) is conducted by way of the duct (21) to the container (20) and the medium steam is condensed in the container (12), whereby the container (20) is heated by medium due to the condensation heat.

16. Method according to claim 15, **characterised in that** during a part program step with rinsing liquid to be heated, for example 'cleaning' or 'pre-rinsing', air is conducted out of the rinsing container (2) through ducts (6, 7) and back again to the rinsing container (2), wherein the air is heated at the sorption column (10).

## Revendications

1. Lave-vaisselle (1) avec un récipient de lavage (2) et des dispositifs de lavage de vaisselle au moyen de liquide de lavage, **caractérisé en ce qu'**un réservoir (20) relié de manière thermoconductrice au récipient de lavage (2) est pourvu d'un agent évaporable et/ou sublimable et une colonne de sorption (10) est pourvue d'une matière de déshydratation réversible (11), dans lequel le réservoir (20) et la colonne de sorption (10) sont reliés de telle façon l'un à l'autre, pour l'échange gazeux par une conduite (21) avec une soupape (22), que le réservoir (20) et/ou la colonne de sorption (10) est/sont d'une part utilisé(e)(s) indirectement pour le séchage de la vaisselle et, d'autre part, l'énergie calorifique utilisée pour la désorption de la colonne de sorption (10) est utilisée au moins en partie pour le chauffage du liquide de lavage et/ou de la vaisselle qui se trouve dans le récipient de lavage.

2. Lave-vaisselle selon la revendication 1, **caractérisé en ce que** le réservoir (20) et la colonne de sorption (10) sont de préférence reliés de façon verrouillable l'un à l'autre pour l'échange gazeux par la conduite (21) avec la soupape (22) et **en ce que** le réservoir (20), la colonne de sorption (10) et la conduite (21) sont une unité fermée vers l'extérieur.

3. Lave-vaisselle selon l'une des revendications 1 ou 2, **caractérisé en ce que** de l'air peut être dirigé au moyen d'une soufflerie (9) au travers d'un orifice de sortie (5) en dehors du récipient de lavage (2) dans des conduites (6, 7) et à nouveau dirigé dans le récipient de lavage (2) au travers d'un orifice d'entrée (8), dans lequel la colonne de sorption (10) est de préférence disposée dans la conduite (6) pour l'échange de chaleur entre l'air et la colonne de sorption (10).

4. Lave-vaisselle selon l'une des revendications précédentes, **caractérisé en ce qu'**un chauffage (12) de préférence électrique est disposé pour la désorption de la matière de déshydratation réversible (11) dans la colonne de sorption (10).

5. Lave-vaisselle (1) selon l'une des revendications précédentes, **caractérisé en ce que** l'agent est p.ex. de l'eau et que la matière de déshydratation réversible (11) est p.ex. de la zéolite.

6. Procédé de séchage dans un lave-vaisselle (1) avec un récipient de lavage (2) avec les étapes suivantes :
- un agent dans un réservoir (20) relié de manière thermoconductrice au récipient de lavage (2) s'évapore ou se sublime, ce qui induit le refroidissement de l'agent,
- de l'humidité se condense dans le récipient de lavage (2) dans la zone du réservoir (20),
- la vapeur d'agent créée dans le réservoir (20) est absorbée par la matière de déshydratation réversible (11) dans une colonne de sorption (10) reliée au réservoir (20) pour l'échange gazeux par une conduite (21) avec une soupape (22) et la matière de déshydratation réversible (11) s'en trouve chauffée,
- de l'air est dirigé hors du récipient de lavage (2) vers la matière de déshydratation réversible (11), chauffé par celle-ci et à nouveau dirigé dans le récipient de lavage (2).

7. Procédé selon la revendication 6, **caractérisé en ce que** l'agent est p.ex. de l'eau et la matière de déshydratation réversible (11) est p.ex. de la zéolite.

8. Procédé selon l'une des revendications 6 ou 7, **caractérisé en ce que** le réservoir (20) avec l'agent d'une part et la colonne de sorption (10) avec la matière de déshydratation réversible (11) d'autre part sont reliés l'un à l'autre par une conduite (21) avec une soupape (22) pour la direction de la vapeur d'agent et le réservoir (20), le sorbeur (10) et la conduite (21) sont de préférence une unité fermée vers l'extérieur.

9. Procédé selon l'une des revendications 6 à 8, **caractérisé en ce que**, durant une section de sous-programme « séchage », la soupape (22) est ouverte et cela rend l'agent dans le réservoir (20) évaporable, **en ce que** le réservoir (20) est refroidi par l'évaporation de l'agent, de sorte que l'humidité sur la face intérieure du récipient de lavage (2) se condense dans la zone du réservoir (20), et **en ce que** de la vapeur d'agent provenant du réservoir (20) est absorbée par la matière de déshydratation réversible (11) dans la colonne de sorption (10) et cela entraîne le chauffage de la colonne de sorption (10).

10. Procédé selon l'une des revendications 6 à 9, **caractérisé en ce que** de l'air est dirigé en dehors de l'espace de traitement (2) via un orifice de sortie (5) dans des conduites (6, 7) par une soufflerie (9) en direction de la matière de déshydratation réversible (11) pour réchauffer l'air et à nouveau dirigé dans l'espace de traitement (2) via un orifice d'entrée (8).

11. Procédé selon l'une des revendications 6 à 10, **caractérisé en ce que**
- la matière de déshydratation réversible (11) est chauffée pour la désorption,
- la vapeur d'agent libérée par la désorption de la matière de déshydratation réversible (11) est condensée dans le réservoir (20), ce qui chauffe l'agent dans le réservoir (20).

12. Procédé selon la revendication 11, **caractérisé en ce que** la matière de déshydratation réversible (11) est chauffée par un élément de chauffage électrique (17).

13. Procédé selon l'une des revendications 11 ou 12, **caractérisé en ce que** de l'air est dirigé en dehors de l'espace de traitement (2) via un orifice de sortie (5) dans des conduites (6, 7, 9) par une soufflerie (9) vers la matière de déshydratation réversible (9) pour réchauffer l'air et à nouveau dirigé dans l'espace de traitement (2) via un orifice d'entrée (8).

14. Procédé selon l'une des revendications 11 à 13, **caractérisé en ce qu'**il est réalisé durant une section de sous-programme avec de la vaisselle à chauffer et/ou du liquide de lavage, p.ex. « lavage » ou « prélavage » afin d'utiliser l'énergie calorifique utilisée pour la désorption au moins en partie pour le chauffage de la vaisselle et/ou du liquide de lavage.

15. Procédé selon l'une des revendications 11 à 14, **caractérisé en ce que,** lorsque le chauffage électrique (12) de désorption de la colonne de sorption (10) fonctionne, la colonne de sorption (10) est chauffée et, lorsque la soupape (22) est ouverte, l'agent lié dans la colonne de sorption (10) s'évapore, la vapeur d'agent libérée dans la colonne de sorption (10) est dirigée via la conduite (21) vers le réservoir (20) et la vapeur d'agent se condense dans le réservoir (12), ce qui chauffe le réservoir (20) avec l'agent en raison de la chaleur de condensation.

16. Procédé selon la revendication 15, **caractérisé en ce que,** durant une section de sous-programme avec fluide de lavage à chauffer, p.ex. « lavage » ou « prélavage », de l'air est dirigé en dehors du récipient de lavage (2) via des conduites (6, 7) et est à nouveau dirigé dans le récipient de lavage (2), l'air étant chauffé dans la colonne de sorption (10).
